# EUROPÄISCHE PATENTSCHRIFT

(11) **EP 1 903 081 B1**
(45) Veröffentlichungstag und Bekanntmachung des Hinweises auf die Patenterteilung: **28.01.2015**
(21) Anmeldenummer: 07018220.9
(22) Anmeldetag: 17.09.2007
(51) Int. Cl.: C09G 1/04, C23F 3/06

(54) **Stabilisator für saure, metallhaltige Polierbäder**
Stabiliser for acid, metallic polishing baths
Stabilisateur de bains de polissage acides contenant du métal

(30) Priorität: 19.09.2006 DE 102006043880
(43) Veröffentlichungstag der Anmeldung: 26.03.2008
(73) Patentinhaber: POLIGRAT GMBH, 81829 München (DE)
(72) Erfinder: Pießlinger-Schweiger, Siegfried, 85591 Vaterstetten (DE); Böhme, Olaf, 85435 Erding (DE)
(74) Vertreter: Wibbelmann, Jobst

(56) Entgegenhaltungen:
- EP-A1- 1 793 016
- WO-A1-2006/081470
- DD-A1- 212 493
- DE-A1- 4 232 612
- US-A- 4 059 678
- Birgit Bertsch-Frank: "Peroxo Compounds, Inorganic" Ullmann's Encyclopedia of Industrial Chemistry 15. Juni 2000 (2000-06-15), Seiten 1-30, XP007914536 DOI: 10.1002/14356007.a19_177 Gefunden im Internet: URL:http://onlinelibrary.wiley.com/doi/10. 1002/14356007.a19_177/pdf [gefunden am 2010-08-19]
- DATABASE WPI Week 199340 Thomson Scientific, London, GB; AN 1993-317337 XP002597598 & JP 5 229889 A (TOMOE KAGAKU KOGYO KK) 7. September 1993 (1993-09-07)

## Beschreibung

Die vorliegende Erfindung betrifft die Verwendung eines Gemisches zur Stabilisierung einer sauren, metall- und peroxidhaltigen Polierlösung. Die Erfindung umfasst auch peroxidhaltige Lösungen die zur Stabilisierung von sauren, metall- und peroxidhaltigen Polierbädern geeignet sind und welche zumindest ein Gemisch aus Harnstoff und einer oder mehreren Alkandiphosphonsäuren aufweisen. Darüber hinaus betrifft die vorliegende Erfindung solche sauren und peroxidhaltigen Polierlösungen, die als Stabilisator ein Gemisch wie oben angegeben enthalten. Schließlich richtet sich die Erfindung auch auf ein Verfahren zum chemischen Polieren von Metalloberflächen unter Verwendung einer sauren, peroxidhaltigen Lösung.

Das chemische Polieren von Metalloberflächen ist ein Verfahren, um Metalloberflächen zu glätten und zu entgraten. Hierbei werden die zu polierenden Metalloberflächen mit oxidierenden Lösungen behandelt, meist durch Eintauchen in Bäder dieser oxidierenden Lösungen. Diese oxidierenden Lösungen basieren vielfach auf wässrigen Mischungen von Peroxiden, insbesondere von Wasserstoffperoxid, mit Mineralsäuren oder deren Salzen, wie zum Beispiel Ammoniumbifluorid (Ammoniumhydrogendifluorid, NH₄HF₂), sowie verschiedenen weiteren Zusätzen, wie etwa Stabilisatoren, Glanzbildnern, Inhibitoren, Tensiden und/oder Viskositätsreglern.

Peroxidhaltigen Lösungen werden häufig Stabilisatoren zugesetzt, da Peroxide wie Wasserstoffperoxid in Gegenwart von Metallen und/oder Metallionen zu katalytischer Zersetzung neigen. Daher ist die Zugabe von Stabilisatoren, die der Zersetzung der Peroxide entgegenwirken, insbesondere in Lösungen wichtig, die in Kontakt mit Metallen und/oder deren Ionen gelangen, wie etwa peroxidhaltige Polierbäder, in denen Metalloberflächen durch Oxidation entgratet und geglättet werden.

Ein bekannter Stabilisator für Peroxide ist Harnstoff, der gemäß dem Stand der Technik sowohl allein als auch in Verbindung mit anderen Stabilisatoren, wie z.B. Ammoniumionen, den wässrigen peroxidhaltigen Lösungen zugesetzt wird.

Das U.S.-Patent 3 122 417 beschreibt die Verwendung von Alkylidendiphosphonsäuren und anderen Reaktionsprodukten der phosphorigen Säure als Stabilisator für Peroxide und deren saure oder basische Lösungen.

Alle bisher verwendeten Stabilisatoren haben jedoch gemein, dass sie nur bis zu einer bestimmten maximalen Metallionenkonzentration wirksam sind. Wird diese Obergrenze erreicht oder überschritten, werden die wässrigen peroxidhaltigen Lösungen instabil und das Peroxid zersetzt sich zunehmend und Sauerstoff entweicht. Sobald diese kritische Konzentration an Metallionen in der wässrigen peroxidhaltigen Lösung erreicht wird, sind diese Lösungen in der Regel nicht mehr einsetzbar und müssen verworfen werden. Dies verursacht häufig erhebliche Kosten, sowohl für die Entsorgung der alten Lösungen wie auch für die Herstellung neuer, frischer Lösungen.

Kritische Obergrenzen für den Gehalt an Metallionen hängen von der Art der Metallionen, der Zusammensetzung der peroxidhaltigen Lösungen und der verwendeten Stabilisatoren ab. Diese liegen etwa für Kupfer im Bereich von 10 bis 30 g/l und für Eisen bei 20 bis 40 g/l.

Das U.S.-Patent 4 070 442 offenbart eine synergistische Stabilisierung von Wasserstoffperoxidlösungen, die ein organisches Phosphonsäurederivat und eine organische Hydroxyverbindung enthalten. Diese Stabilisatormischung ist speziell für die Hydrometällurgie und die Trennung und Reinigung von Mineralen geeignet.

Aus der DE 4232612 A1 sind saure, wässrige Reinigungslösungen bekannt, die mindestens eine Phosphonsäure, mindestens ein Oxidationsmittel und mindestens eine kurzkettige organische Carbonsäure enthalten. Als mögliches Oxidationsmittel wird Harnstoff-Wasserstoffperoxid erwähnt. Die vorliegende Erfindung setzt üblicherweise Harnstoff als solches ein und nicht in Form eines 1:1 Adduktes mit Wasserstoffperoxid. Die Stabilisierung von peroxidhaltigen Lösungen wird in diesem Dokument aber nicht angesprochen. Vielmehr geht es um die Entfernung von Magnetit. Die Verwendung von Phosphonsäuren dient im Wesentlichen der Ablösung der festhaftenden Magnetitbeläge. Die dort beschriebenen Reinigungslösungen werden regelmäßig bei Temperaturen in einem Bereich von 80 bis 100 °C eingesetzt. Bei Verfahren, die mit Peroxiden arbeiten wird man solch hohe Temperaturen vermeiden, da sich Peroxide im Allgemeinen ab ca. 60 °C bereits autokatalytisch zersetzen.

Das US-Patent 4,059,678 offenbart wässrige, saure Lösungen von Wasserstoffperoxid, die Eisenverunreinigungen mit einer Konzentration von 30 bis 30.000 ppm aufweisen können. Eine Stabilisierung solcher Lösungen wird dadurch erreicht, dass Amino-Methylphosphonsäure-Derivate zugesetzt werden. Diese Verbindungen dienen dazu, in stark sauren Peroxid-Lösungen Eisen auszufällen.

Aus der DE-Offenlegungsschrift 1519484 sind Stabilisatoren für Lösungen von Peroxyverbindungen bekannt, die neben bestimmten Aminotriphosphonsäuren auch Harnstoffperverbindungen enthalten können. Die Lösungen haben regelmäßig einen pH-Wert von etwa 7,5 bis etwa 12,5. Es wird ausdrücklich angegeben, dass Lösungen mit einem pH-Wert von unterhalb 7,5 als Peroxid-Bleichlösung nicht geeignet sind, da bei niedrigeren pH-Werten die Bleichgeschwindigkeit soweit herabgesetzt wird, dass ein wirtschaftliches Arbeiten nicht mehr möglich ist.

Die CN 1720313 A offenbart eine Paste oder Aufschlämmung, die zum mechanischen Polieren von Metallen geeignet sein soll. Diese Paste kann neben einem Harnstoffperoxid auch unter anderem 1-Hydroxethan-1,1-diphosphonsäure als Chelatierungsmittel enthalten. Eine mögliche Stabilisierung der Pasten oder Aufschlämmung wird nicht erwähnt.

Ein häufiger weiterer Nachteil der Stabilisatoren gemäß dem Stand der Technik besteht darin, dass diese Stabilisatoren auch unterhalb der kritischen Metallionenkonzentration die Zersetzung der Peroxide nicht vollständig unterbinden, sondern diese nur verlangsamen. Aus diesem Grund muss sowohl während des Verwendung der peroxidhaltigen Lösungen als auch bei deren Lagerung, etwa im Rahmen von längeren Betriebspausen, das in der Lösung vorhandene Peroxid regelmäßig auf seine Konzentration hin überprüft werden und häufig Peroxid nachdosiert werden, um die Verluste durch katalytische Zersetzung auszugleichen. Die aufgrund der katalytischen Zersetzung auftretenden Schwankungen der Konzentration an Peroxid in den Lösungen können dabei die Qualität der Prozesse negativ beeinflussen. Um dies zu vermeiden, ist eine stetige, kostenaufwendige analytische Überwachung der Lösungen erforderlich.

Viele Prozesse, bei denen wässrige peroxidhaltige Lösungen eingesetzt werden, wie etwa chemische Polierverfahren, verlaufen exotherm. Dies hat zur Folge, dass sich die Lösungen während des Prozesses erwärmen und daher gekühlt werden müssen, um die erwünschte Arbeitstemperatur einzuhalten. Die Erwärmung kann auch zur Folge haben, dass die kritische Temperatur der Peroxide, bei der eine ebenfalls exotherme autokatalytische Zersetzung der Peroxide einsetzt, erreicht oder überschritten wird. Bei wässrigen Wasserstoffperoxidlösungen liegt diese kritische Temperatur bei ca. 65°C. Auch eine weitere Zugabe von Stabilisatoren kann bei Überschreiten dieser Temperatur die autokatalytische Zersetzung nicht mehr wirksam aufhalten. Bei dieser Zersetzung der Peroxide verlieren handelsübliche Stabilisatoren zudem irreversibel ihre Wirksamkeit, weshalb die Lösungen/Polierbäder verworfen, entsorgt und neu angesetzt werden müssen.

### Beschreibung der Erfindung

Gegenstand der Erfindung ist im Wesentlichen die Verwendung eines Gemisches aus Harnstoff und einer oder mehreren hydroxy-substituierten Alkylendiphosphonsäuren, bzw. deren Salzen zur Stabilisierung einer sauren, metall- und peroxidhaltigen Polierlösung. Eine Solche Polierlösung hat üblicherweise einen pH-Wert von 0 bis 3.

Es ist bekannt, dass Metallionen, die sich im Laufe der Durchführüng eines Polierverfahrens bilden, die Zersetzung der Peroxide beschleunigen können. Deshalb war es im Fall der vorliegenden Erfindung überraschend, dass sowohl insbesondere bei Eisen- als auch Kupferoberflächen das Pollerbad bei hohen Metallkonzentrationen (z.B. >20 g/l) noch einsatzfähig war.

Als Pollerbäder im Sinne der vorliegenden Erfindung werden im allgemeinen wässrige, saure peroxidhaltige Lösungen verstanden. Aufschlämmungen und Pasten, bei denen zusätzlich mechanische Abriebmittel zum Einsatz kommen, sind zwar denkbar, gehören aber nicht zum unmittelbaren Gegenstand der vorliegenden Erfindung.

Weitere Gegenstände der Erfindung ergeben sich aus der weiteren Beschreibung und den beiliegenden Ansprüchen.

Gegenstand der Erfindung ist ein neuartiger Stabilisator für wässrige peroxidhaltige Lösungen, der weitgehend unabhängig von der Konzentration der in der Lösung gelösten Metallionen die Zersetzung des Peroxids zuverlässig unterdrückt.

Ein erfindungsgemäßer Stabilisator besteht aus einer Kombination von Harnstoff und einer oder mehreren hydroxy-substituiertern Alkylendiphosphonsäuren, bzw. deren Salzen, wobei die Kohlenwasserstoffkette bevorzugt 1, 2, 3 oder 4 C-Atome umfasst. Eine besonders geeignete Alkylendiphosphonsäure ist 1-Hydroxyethan-1,1-diphosphonsäure.

Eine besonders hohe Wirksamkeit dieses neuen Stabilisators gemäß der Erfindung wurde beobachtet, wenn das Gewichtsverhältnis von Harnstoff zu freien Alkylendiphosphonsäuren im Bereich von 100:1 bis 20:1 liegt. Vorzugsweise liegt dieses Gewichtsverhältnis zwischen 60:1 und 35:1, insbesondere bei etwa 50:1.

Der Stabilisator dient der Stabilisierung von wässrigen peroxidhaltigen Polierlösungen. Darunter werden in erster Linie wässrige Wasserstoffperoxid-haltige Lösungen verstanden, es können aber auch andere peroxidhaltige Lösungen auf diese Weise stabilisiert werden, etwa Lösungen, die Perschwefelsäuren und/oder Peroxycarbonsäuren, wie etwa Peressigsäure, bzw. deren Salze enthalten.

Die Konzentration einer stabilisierten wässrigen Lösung von Wasserstoffperoxid kann dabei etwa 30 oder 35% betragen, sie kann aber auch geringer sein, etwa ≤20%, ≤ 10% oder ≤5%.

Die mit dem Stabilisator der vorliegenden Erfindung stabilisierten Lösungen sind ebenfalls ein Aspekt der vorliegenden Erfindung. Diese Lösungen können neben dem Stabilisator, dem oder den Peroxiden und Wasser auch weitere Bestandteile enthalten. Häufig enthalten peroxidhaltige Lösungen eine oder mehrere weitere Säuren, etwa Mineralsäuren wie Salzsäure, Schwefelsäure, Phosphorsäure, Perchlorsäure, Flusssäure und/oder organische Säuren wie Carboxysäuren und Sulfonsäuren.

Die Stabilisatoren können erfindungsgemäß den wässrigen peroxidhaltigen Lösungen als Reinsubstanz ebenso wie als Lösungen zugesetzt werden. In der Regel wird der Stabilisator in einer Konzentration von 0,1 bis 3,0 Gew.-% in der Lösung verwendet. Vorzugsweise liegt die Konzentration zwischen 0,2 und 3,0 Gew.-%, insbesondere etwa bei 0,4 bis 1,0 Gew.-% der wässrigen peroxidhaltigen Lösung.

Die in dem erfindungsgemäßen Stabilisator enthaltenen Substanzen Harnstoff und Alkylidendiphosphonsäure(n) sind einzeln bereits als Stabilisatoren bekannt und werden als solche auch benutzt. Sie zeigen für sich genommen jedoch die vorgenannten Schwächen herkömmlicher Stabilisatoren.

Es hat sich nun überraschend gezeigt, dass eine Kombination von Harnstoff mit einer oder mehreren Alkandiphosphonsäuren einen Stabilisator für wässrige peroxidhaltige Lösungen liefert, der neuartige Eigenschaften aufweist. So hat ein Stabilisator, bestehend aus einem Gemisch von Harnstoff oder einer oder mehreren Alkandiphosphonsäuren oder deren Salzen folgende Eigenschaften, die für vielerlei Anwendungen von Bedeutung sind, wie etwa bei einer Verwendung der stabilisierten Lösungen als chemische Polierbäder zur Behandlung von Metalloberflächen. Der Begriff chemisches Polierbad umfasst dabei nicht nur Tauchbäder, sondern sämtliche Verwendungsformen der stabilisierten peroxidhaltigen Lösungen, die dem Polieren oder Entgraten von Metalloberflächen aufgrund einer chemischen Reaktion des Peroxids dienen.
1. Mit dem Stabilisator gemäß der Erfindung können wässrige peroxidhaltige Lösungen, wie chemische Polierbäder, bis zur Sättigung mit Metallionen oder bis zur Erschöpfung der Wirksubstanzen (wie der gegebenenfalls zugegebenen Mineralsäure/Mineralsäuren) verwendet werden, ohne dass die Wirkung der wässrigen peroxid-haltigen Lösung, speziell deren oxidierende Wirküng, in nennenswertem Umfang nachlässt. Auch können erschöpfte Lösungen durch einfache Ergänzung der Wirksubstanzen wieder voll funktionsfähig gemacht werden und müssen daher nicht verworfen werden.
2. Auch wenn die wässrigen peroxidhaltigen Lösungen überhitzen, so dass eine autokatalytische Zersetzung der Peroxide eintritt, wird der Stabilisator gemäß der vorliegenden Erfindung regelmäßig nicht geschädigt. Nach dem Ausreagieren und Abkühlen der Lösungen unter die kritische Temperatur sind die wässrigen Lösungen nach Ergänzen des Peroxids wieder uneingeschränkt verwendbar, und die stabilisierende Wirkung des Stabilisators ist nicht beeinträchtigt.
3. Die stabilisierende Wirkung des Stabilisators gemäß der Erfindung ist häufig deutlich höher als die der Einzelverbindungen oder anderer Stabilisatoren gemäß dem Stand der Technik. So wurde beobachtet, dass die Lösungen sowohl während ihrer Verwendung, etwa als chemische Polierbäder beim Entgraten und Polieren von Werkstücken, als auch während ihrer Lagerung, etwa während Arbeitspausen, nur unwesentlich Sauerstoff aufgrund der Zersetzung der Peroxide verlieren. Dadurch können die Lösungen mit gegebenenfalls weiteren zugegebenen Wirksubstanzen wie Mineralsäuren wirtschaftlich optimal genutzt werden.
4. Aufgrund der hohen stabilierenden Wirkung des Stabilisators gemäß der vorliegenden Erfindung kann auf aufwändige organische Zusätze wie etwa Ammoniumionen verzichtet werden. Dadurch lassen sich die anfallenden Kosten für die Aufbereitung von Abwasser und Konzentraten drastisch reduzieren. Die Aufbereitung der verwendeten Lösungen kann durch einfaches Neutralisieren in Verbindung mit einer Abtrennung der Metallionen durch Fällung erfolgen. Eine spezielle Behandlung von Komplexen oder die Verbrennung der Bäder oder Schlämme aufgrund ihres Ammoniumionengehalts kann entfallen.
5. Bei der Verwendung der wässrigen peroxidhaltigen Lösungen als chemisches Polierbad zur Behandlung von Metalloberflächen kann die Zusammensetzung dieser Polierbäder auf die Wirksubstanzen Säure, Peroxid und Stabilisator beschränkt werden. Der Zusatz weiterer Substanzen ist möglich, jedoch in der Regel nicht erforderlich, so dass auch hier eine erhebliche Reduzierung der Kosten ermöglicht wird.
6. Bei der Verwendung als chemisches Polierbad kann die Abtragsgeschwindigkeit und die Wirksamkeit der Bäder gegenüber den Verfahren gemäß dem Stand der Technik um ein Vielfaches gesteigert werden, ohne dass dabei Einbußen der Qualität zu beobachten sind.

Diese Vorzüge unterscheiden die Stabilisatoren der vorliegenden Erfindung von anderen Stabilisatoren gemäß dem Stand der Technik. Diese Eigenschaften sind das Ergebnis eines unerwarteten synergistischen Effekts der Bestandteile des Stabilisators. Der synergistische Effekt ist besonders ausgeprägt, wenn die Bestandteile Harnstoff und Alkandiphosphonsäure in einem Gewichtsverhältnis von 100:1 bis 20:1 eingesetzt werden.

Ein weiterer Aspekt der vorliegenden Erfindung sind Verfahren zum chemischen Polieren von Metalloberflächen mit einem peroxidhaltigen Polierbad, das den erfindungsgemäßen Stabilisator enthält. Unter chemischem Polieren wird dabei das Glätten und Entgraten von Metalloberflächen durch eine oxidierende saure Lösung verstanden. Die Werkstücke, deren Oberflächen mit einem Verfahren gemäß der vorliegenden Erfindung chemisch poliert werden können, können dabei aus verschiedenen Metallen bestehen. Das Verfahren kann etwa auf kupferhaltige Metalloberflächen angewendet werden, wie sie bei Werkstücken aus Kupfer oder Kupferlegierungen auftreten. Das Verfahren kann ebenfalls auf eisenhaltige Metalloberflächen angewendet werden, wie sie etwa in Bauteilen aus Kohlenstoff-Stahl (C-Stahl) und Weicheisen vorliegen.

Beim chemischen Polieren von C-Stahl wird im Stand der Technik eine Lösung verwendet, die neben dem oxidierenden Mittel Ammoniumbifluorid enthält. Bei der Verwendung eines Verfahrens gemäß der vorliegenden Erfindung kann Ammoniumbifluorid durch Flusssäure in entsprechender Konzentration ersetzt werden. Dies verringert nicht nur die Kosten für die einzusetzenden Bestandteile des Polierbades, sondern auch die Kosten, die bei der Entsorgung der ammoniumhaltigen Bäder und Schlämme anfallen. Außerdem können in solchen Flusssäure-haltigen Polierbädern deutlich höhere Bearbeitungsgeschwindigkeiten der Metallstücke erzielt werden, die um ein Mehrfaches höher liegen als in Polierbädern gemäß dem Stand der Technik. Außerdem kann auf eine Reihe sonstiger organischer Zusätze, wie sie in herkömmlichen Bädern erforderlich sind, ebenfalls verzichtet werden.

Das Verfahren zum chemischen Polieren gemäß der vorliegenden Erfindung umfasst das Inkontaktbringen einer Metalloberfläche mit der stabilisierten wässrigen, peroxidhaltigen Lösung auf jede geeignete Weise. Dies kann beispielsweise durch das Eintauchen des Werkstücks in ein Polierbad erfolgen, aber ebenso auf andere Weise, etwa durch das Durchleiten der Lösung durch zu polierende Innenräume oder gezieltes Aufsprühen auf die Oberfläche eines Werkstücks. Wenn das oder die zu bearbeitenden Werkstücke in die wässrige peroxidhaltige Lösung eingetaucht werden, ist es häufig von Vorteil, das Polierbad dabei zu rühren. Dies ermöglicht eine Verringerung der nötigen Einwirkzeit und ein gleichmäßiges Polieren der Metalloberfläche. Den stabilisierten wässrigen, peroxidhaltigen Lösung können nach Wunsch weitere Zusätze, wie etwa Glanzbildner, Inhibitoren, Tenside und/oder Viskositätsregler beigefügt werden.

Das Polieren erfolgt meist bei Raumtemperatur oder leicht darüber liegenden Temperaturen, etwa zwischen 20 und 45 °C. Die optimale Einwirkzeit hängt dabei von vielen Faktoren ab, wie Temperatur, Zusammensetzung von Lösung und Metalloberflächen und der anfänglichen Rauhheit der zu polierenden Metalloberflächen, jedoch aufgrund des erfindungsgemäßen Stabilisators nur sehr eingeschränkt von der Metallionenkonzentration in der Lösung.

Im Anschluss an die Behandlung im Polierbad bzw. nach dem Kontakt mit der wässrigen peroxidhaltigen Lösung wird das bearbeitete Werkstück üblicherweise mit entmineralisiertem Wasser gespült und getrocknet.

Die Erfindung wird in den folgenden Beispielen näher erläutert.

### Beispiel 1

### Chemische Polierbäder zur Bearbeitung von Kohlenstoffstahl C 45

### A - Polierbar gemäß dem Stand der Technik:

### Zusammensetzung (in Gew.-%):

| | |
|---|---|
| Ammoniumhydrogendifluorid | 0,8% |
| Harnstoff | 1,8% |
| Oxalsäure | 0,5% |
| Wasserstoffperoxid (35%ig) | 10,0% |
| Wasser | Rest |

### Parameter:

Temperatur 30°C
Eisenabtrag (Aktivität): 50 mg/(dm² min)

### Ergebnis:

Die Oberflächen waren glänzend, die Kanten entgratet.

Arbeitsbereich bis zu einer Konzentration von 20 g/I an gelöstem Eisen, bei höherer Konzentration stieg der Verbrauch an Wasserstoffperoxid stark an. Ab 30 g/l war das Bad nicht mehr arbeitsfähig und musste durch Teilaustausch regeneriert werden. Ab 25 g/l Eisen in Lösung setzte zunehmend eine Ausfällung schwer löslicher Niederschläge (Salzbeläge) ein.

Eine Steigerung der Aktivität durch Erhöhung der Konzentration an Ammoniumhydrogendifluorid war möglich bis zu einer Aktivität von 80 mg/(dm² min). Bei höherer Aktivität wurden die Oberflächen matt und rau.

### B - Erfindungsgemäßes Polierbad

### Zusammensetzung (in Gew.-%):

| | |
|---|---|
| Flusssäure | 0,7% |
| Harnstoff | 0,7% |
| 1-Hydroxyethan-1,1-diphosphonsäure | 0,02% |
| Wasserstoffperoxid (35%ig) | 20,0% |
| Wasser | Rest |

### Parameter:

| | |
|---|---|
| Temperatur: | 30°C |
| Aktivität: | 200 mg/(dm² min) |

### Ergebnis:

Glatte, glänzende Oberflächen, Kanten entgratet.

Eine Erhöhung der Aktivität durch Erhöhung der Konzentration von HF und Stabilisator war möglich bis zu 600 mg/(dm² min) ohne dass dabei ein Qualitätsverlust auftrat. Es wurden auch keine Ausfällungen im Bad festgestellt. Der Verbrauch an Wasserstoffperoxid erhöhte sich nicht. Das Bad war arbeitsfähig bis zu einer Eisenkonzentration von 60 g/l.

Das Bad (B) zeigte gegenüber dem Bad (A) eine bis zum Faktor 8 höhere Aktivität mit entsprechend verkürzten Wirkzeiten sowie eine um den Faktor 3 längere Lebensdauer. Darüber hinaus liegen die Kosten für die Chemikalien bei Bad (B) deutlich unter denen von Bad (A).

### Beispiel 2

### Chemische Polierbäder zur Bearbeitung von Kupfer

### A - Polierbad gemäß dem Stand der Technik

### Zusammensetzung (in Gew.-%):

| | |
|---|---|
| Schwefelsäure (96%ig) | 1,0% |
| Wasserstoffperoxid (35%ig) | 14,0% |
| Stabilisator (handelsüblich) | 1,0% |
| Wasser | Rest |

### Parameter:

| | |
|---|---|
| Temperatur: | 35°C |
| Abtragsrate: | 0,1 g/(dm² min) |

### Ergebnis:

Guter Glanz, Kanten entgratet. Ab einem Gehalt von 10 g/l Kupfer ansteigender Verbrauch von Wasserstoffperoxid. Über einem Kupfergehalt von 20 g/l ließ die Qualität der Oberflächen deutlich nach bei stark ansteigendem Verbrauch an Wasserstoffperoxid.

### B - Erfindungsgemäßes Bad

### Zusammensetzung (in Gew.-%):

| | |
|---|---|
| Schwefelsäure (96%ig) | 1,0% |
| Wasserstoffperoxid (35%ig) | 14,0% |
| Harnstoff | 0,4% |
| 1-Hydroxyethan-1,1-diphosphonsäure | 0,01% |
| Wasser | Rest |

### Parameter:

| | |
|---|---|
| Temperatur: | 35°C |
| Abtragsrate: | 0,1 g/(dm² min) |

### Ergebnis

Glänzende Oberflächen bis zu einem Kupfergehalt von 50 g/l. Bis zu einem Kupfergehalt von 30 g/l in der Lösung bleibt der Verbrauch an Wasserstoffperoxid konstant. Bei höherer Konzentration steigt der Verbrauch pro Betriebsstunde leicht an. Dies entspricht einer 2,5- bis 3-fachen Lebensdauer des erfindungsgemäßen Bades.

## Patentansprüche

1. Verwendung eines Gemisches aus Harnstoff und einer oder mehreren hydroxy-substituierten Alkylendiphosphonsäuren, bzw. deren Salzen zur Stabilisierung einer sauren, metall- und peroxidhaltigen Polierlösung.

2. Verwendung nach Anspruch 1, wobei das Gewichtsverhältnis Harnstoff zu Alkylendiphosphonsäure im Bereich von 100:1 bis 20:1 liegt.

3. Verwendung nach Anspruch 1 oder 2, wobei die Alkylendiphosphonsäure 1-Hydroxyethan-1,1-diphosphonsäure umfasst.

4. Verwendung nach irgendeinem der vorstehenden Ansprüche, wobei die saure, metall- und peroxidhaltige Polierlösung einen pH-Wert von 0 bis 3 aufweist.

5. Saure, peroxidhaltige Polierlösung, die als Stabilisator ein Gemisch von Harnstoff und einer oder mehreren hydroxy-substituierten Alkylendiphosphonsäuren, bzw. deren Salzen umfasst.

6. Polierlösung nach Anspruch 5, **dadurch gekennzeichnet, dass** der Stabilisator in einer Konzentration von 0,1 bis 3,0 Gew.-% in der Lösung vorliegt.

7. Polierlösung nach Anspruch 5 oder 6, **dadurch gekennzeichnet, dass** das Gewichtsverhältnis von Harnstoff zu Alkylendiphosphonsäuren im Bereich von 100:1 bis 20:1 liegt.

8. Polierlösung nach einem der Ansprüche 5 bis 7, **dadurch gekennzeichnet, dass** die Lösung eine oder mehrere weitere Säuren enthält.

9. Polierlösung nach Anspruch 8, **dadurch gekennzeichnet, dass** die Lösung Flusssäure enthält.

10. Polierlösung nach Anspruch 8, **dadurch gekennzeichnet, dass** die Lösung Schwefelsäure enthält.

11. Verfahren zum chemischen Polieren von Metalloberflächen mit einer sauren, peroxidhaltigen Lösung bei einer pH-Wert von 0 bis 3, **dadurch gekennzeichnet, dass** eine peroxidhaltige Lösung zusammen mit einem Gemisch von Harnstoff und einer oder mehreren hydroxy-substituierten Alkylendiphosphonsäuren, bzw. deren Salzen eingesetzt wird.

12. Verfahren nach Anspruch 11, **dadurch gekennzeichnet, dass** eisenhaltige Metalloberflächen chemisch poliert werden.

13. Verfahren nach Anspruch 12, **dadurch gekennzeichnet, dass** die wässrige peroxidhaltige Lösung Flusssäure enthält.

14. Verfahren nach Anspruch 13, **dadurch gekennzeichnet, dass** kupferhaltige Metalloberflächen chemisch poliert werden.

15. Verfahren nach Anspruch 13, **dadurch gekennzeichnet, dass** die wässrige peroxidhaltige Lösung Schwefelsäure enthält.

## Claims

1. Use of a mixture of urea and one or more of hydroxy-substituted alkane-diphosphonic acids and their salts, respectively, for stabilization of an acid, metal and peroxide containing polishing solution.

2. Use of claim 1,
wherein the weight ratio of urea to alkane-diphosphonic acid
is in a range of from 100:1 to 20:1.

3. Use of claim 1 or 2,
wherein the alkane-diphosphonic acid comprises 1-hydroxyethane-1,1-diphosphonic acid.

4. Use of any of the preceding claims,
wherein the acid, metal and peroxide containing polishing solution has a pH-value of 0 to 3.

5. Acidic, peroxide containing polishing solution comprising a mixture of urea and one or more hydroxy-substituted alkane-diphosphonic acids and their salt, respectively, as a stabilizer.

6. Polishing solution of claim 5,
**characterized in that** the stabilizer is present in a concentration of from 0.1 to 3.0 wt.-% in the solution.

7. Polishing solution of claim 5 or 6,
**characterized in that** the weight ratio of urea to alkane-diphosphonic acids is in the range of from 100:1 to 20:1.

8. Polishing solution of one of claims 5 to 7,
**characterized in that** the solution contains one or more further acids.

9. Polishing solution of claim 8,
**characterized in that** the solution contains hydrofluoric acid.

10. Polishing solution of claim 8,
**characterized in that** the solution contains sulphuric acid.

11. Process for chemical polishing of metal surfaces with an acidic peroxide containing solution at a pH-value of 0 to 3, **characterized in that** the peroxide containing solution is used together with the mixture of urea and one or more hydroxy-substituted alkane-diphosphonic acids and their salts, respectively.

12. Process of claim 11,
**characterized in that** the iron containing metal surfaces are chemically polished.

13. Process of claim 12,
**characterized in that** the aqueous peroxide containing solution contains hydrofluoric acid.

14. Process of claim 13,
**characterized in that** the copper containing metal surfaces are chemically polished.

15. Process of claim 13,
**characterized in that** the aqueous peroxide containing solution contains sulphuric acid.

## Revendications

1. Utilisation d'un mélange d'urée et d'un ou plusieurs acides alkylène-diphosphoniques substitués par un groupe hydroxyle, ou de leurs sels, pour stabiliser une solution de polissage acide contenant un métal et un peroxyde.

2. Utilisation selon la revendication 1, le rapport pondéral entre l'urée et l'acide alkylène-diphosphonique se situant dans la plage allant de 100:1 à 20:1.

3. Utilisation selon la revendication 1 ou 2, l'acide alkylène-diphosphonique comprenant de l'acide 1-hydroxyéthane-1,1-diphosphonique.

4. Utilisation selon l'une quelconque des revendications précédentes, la solution de polissage acide contenant un métal et un peroxyde présentant un pH de 0 à 3.

5. Solution de polissage acide contenant un peroxyde qui comprend, en tant que stabilisateur, un mélange d'urée et d'un ou plusieurs acides alkylène-diphosphoniques substitués par un groupe hydroxyle, ou de leurs sels.

6. Solution de polissage selon la revendication 5, **caractérisée en ce que** le stabilisateur est présent dans la solution dans une concentration de 0,1 à 3,0 % en poids.

7. Solution de polissage selon la revendication 5 ou 6, **caractérisée en ce que** le rapport pondéral entre l'urée et les acides alkylène-diphosphoniques se situe dans la plage allant de 100:1 à 20:1.

8. Solution de polissage selon l'une des revendications 5 à 7, **caractérisée en ce que** la solution contient un ou plusieurs autres acides.

9. Solution de polissage selon la revendication 8, **caractérisée en ce que** la solution contient de l'acide fluorhydrique.

10. Solution de polissage selon la revendication 8, **caractérisée en ce que** la solution contient de l'acide sulfurique.

11. Procédé de polissage chimique de surfaces métalliques avec une solution acide contenant un peroxyde à un pH de 0 à 3, **caractérisé en ce que** l'on utilise une solution contenant un peroxyde conjointement avec un mélange d'urée et d'un ou plusieurs acides alkylène-diphosphoniques substitués par un groupe hydroxyle, ou de leurs sels.

12. Procédé selon la revendication 11, **caractérisé en ce que** l'on polit chimiquement des surfaces métalliques contenant du fer.

13. Procédé selon la revendication 12, **caractérisé en ce que** la solution aqueuse contenant un peroxyde contient de l'acide fluorhydrique.

14. Procédé selon la revendication 13, **caractérisé en ce que** l'on polit chimiquement des surfaces métalliques contenant du cuivre.

15. Procédé selon la revendication 13, **caractérisé en ce que** la solution aqueuse contenant un peroxyde contient de l'acide sulfurique.
